(19) **Europäisches Patentamt**
**European Patent Office**
**Office européen des brevets**

(11) **EP 2 461 525 B1**

(12) **EUROPEAN PATENT SPECIFICATION**

(45) Date of publication and mention
of the grant of the patent:
**25.09.2013 Bulletin 2013/39**

(51) Int Cl.:
***H04L 12/70*** *(2013.01)*

(21) Application number: **10015260.2**

(22) Date of filing: **03.12.2010**

(54) **Method and appratus for aligning data frames in a transceiver device**

Verfahren und Vorrichtung zum Ausrichten von Datenrahmen in einem Sende-/Empfangsgerät

Procédé et appareil permettant d'aligner les trames de données dans un dispositif d'émetteur-récepteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.06.2012 Bulletin 2012/23**

(73) Proprietor: **MIMOON GmbH**
**47057 Duisburg (DE)**

(72) Inventor: **Hraibi, Karim**
**47279 Duisburg (DE)**

(74) Representative: **Eisenführ, Speiser & Partner**
**Postfach 31 02 60**
**80102 München (DE)**

(56) References cited:
**EP-A1- 0 864 967          EP-A1- 2 045 973
WO-A1-03/007558          JP-A- 2001 094 613
US-A1- 2005 141 418**

• **TACHWALI Y ET AL: "Design and implementation
of online mode switching on hybrid software
radio platforms", MILITARY COMMUNICATIONS
CONFERENCE, 2008. MILCOM 2008. IEEE, IEEE,
PISCATAWAY, NJ, USA, 16 November 2008
(2008-11-16), pages 1-7, XP031408233, ISBN:
978-1-4244-2676-8**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

<u>FIELD OF THE INVENTION</u>

The present invention relates to a method, apparatus and computer program product for aligning data frames in a transceiver device for use in - but not limited to - a software defined radio (SDR) system for wireless communication networks.

<u>BACKGROUND OF THE INVENTION</u>

With the exponential growth in the ways and means by which people need to communicate - data communications, voice communications, video communications, broadcast messaging, command and control communications, emergency response communications etc., modifying radio devices easily and cost-effectively has become critical.

A radio device is any kind of device that wirelessly transmits or receives signals in the radio frequency (RF) range of the electromagnetic spectrum to facilitate the transfer of information. In today's world, radio devices exist in a multitude of items such as cell phones, computers, car door openers, vehicles, and televisions. A software defined radio device (SDR) is a transmitter (Tx) and receiver (Rx) device (or transceiver device) that uses digital signal processing (DSP) for coding, decoding, modulation, demodulation and other receiver and transmitter related tasks. This allows much more power and flexibility when choosing and designing modulation and coding techniques. Thus, SDR technology brings the flexibility, cost efficiency and power to drive communications forward, with wide-reaching benefits realized by service providers and product developers through to end users.

Traditional hardware based radio devices limit cross-functionality and can only be modified through physical intervention. This results in higher production costs and minimal flexibility in supporting multiple waveform standards. By contrast, software defined radio technology provides an efficient and comparatively inexpensive solution to this problem, allowing multi-mode, multi-band and/or multi-functional wireless devices that can be enhanced using software upgrades.

SDR defines a collection of hardware and software technologies where some or all of the radio's operating functions (also referred to as physical layer processing) are implemented through modifiable software or firmware operating on programmable processing technologies. These devices include field programmable gate arrays (FPGAs), DSPs, general purpose processors (GPPs), programmable System on Chip (SoC) or other application specific programmable processors. The use of these technologies allows new wireless features and capabilities to be added to existing radio systems without requiring new hardware.

A fundamental challenge that arise when designing and implementing an SDR system consists of precisely aligning the Rx and Tx radio frames, and being able to advance the Tx frame in relation to the Rx frame in order to compensate for the radio wave propagation delay between the transmitter and the receiver. A conventional solution for aligning Tx and Rx radio frames is to use a dedicated hardware logic implemented on-chip. Commonly used software solutions require passing synchronization parameters from a first DSP of the receiver to a second DSP in the transmitter in real-time.

United States patent application publication US 2005/0141418 A1 describes a ring buffer management system and a corresponding method. It is supposed to be possible to prevent data transmission delay and efficiently manage the ring buffer because a high/low layer module of a TCP/IP stack can apparently determine a transmit/receive data size.

European patent application EP 2 045 973 A1 describes a memory buffer system for fast data exchange and a corresponding method. It is proposed to use an interconnected system of different kinds of memory buffers, implemented as asynchronous read/write ring buffers ARWRB. These buffers are organized in such a way that data can be stored into the buffer or fetched from the buffer essentially avoiding synchronization means like mutexes or semaphores.

Japanese patent application publication JP 2001-094613 presents a communication controller. According to that disclosure, a ring buffer corresponding to a logic channel of a received packet stores packet data of a received packet and a receptible credit number is calculated on the basis of a transferable maximum packet size of the logic channel and of an idle capacity of the ring buffer that is calculated according to a write pointer and a read pointer. The communication controller calculates an additional receptible credit number on the basis of a difference between the receptible credit number and a packet number that is grasped by the communication controller on the reception of data and able to be sent to the transmitter side and issues the additional receptible credit number to the transmitter side.

<u>SUMMARY</u>

It is an object of the present invention to provide a solution for frame alignment which does not require real-time communication between the receiver part and the transmitter part of an SDR device.

This object is achieved by a method as claimed in claim 1, an apparatus as claimed in claim 5 and a computer program product as claimed in claim 13.

Accordingly, very small number of parameters needs to be communicated between the receiver and the transmitter of the transceiver device. Moreover, communication of parameters between the receiver and the transmitter must not be done in real- time. Occasional updating of the values required by the transmitter is enough for reliable operation. The lack of the real- time requirement in passing the set of values from the transmitter to the receiver eliminates the eventuality of the buffer operation at the transmitter being blocked by the buffer operation at the receiver. Thus, timing constraints can be eliminated and implementation and debugging procedure can be simplified.

The small numbers of values to be transferred between the receiver and the transmitter and the low frequency at which they are passed (less than once per radio frame or even once every 10 radio frames) conserve the bandwidth of the memory circuit used for inter buffer communication.

The target value for the wrap count of the transmission buffer may be calculated by adding a predetermined value to the current wrap count of the reception buffer. In an exemplary implementation, the predetermined value may be an integer multiple of a difference between a current frame sequence number of the transmission buffer, increased by a first integer value, and the current frame sequence number of the reception buffer.

Furthermore, the target value for the read/ write offset of the transmission buffer may be calculated by subtracting or adding a second integer value from/to the current read/ write offset of the reception buffer.

The above apparatus, whose purpose is to precisely align the transmitted radio frame to the received one in time, may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a schematic block diagram of a transceiver device according to a first embodiment;

Fig. 2 shows a schematic block diagram of a buffer arrangement in the first embodiment;

Fig. 3 shows a flow diagram of a frame alignment procedure according to a second embodiment;

Fig. 4 shows a schematic block diagram of software-based implementation according to a third embodiment; and

Fig. 5 shows an example of a simplified C code for implementing the procedure of Fig. 3.

DESCRIPTION OF THE EMBODIMENTS

In the following, embodiments of the present invention will be described based on a transceiver device of an exemplary SDR system.

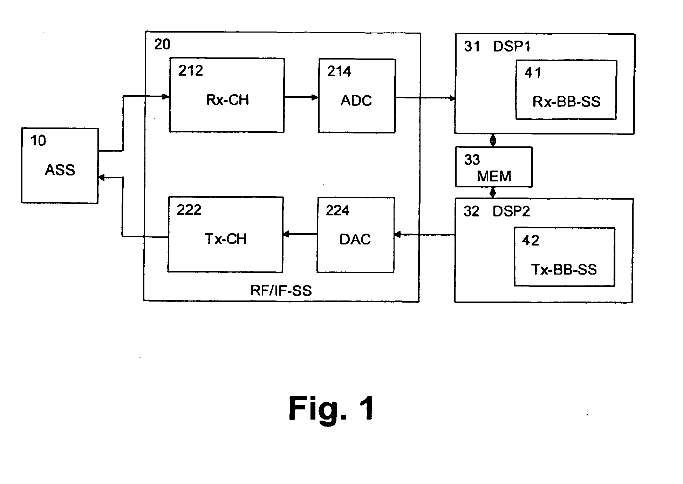

Fig. 1 shows a schematic block diagram of an SDR transceiver device according to a first embodiment.

The transceiver device comprises an antenna subsystem (ASS) 10 which might consist of one or several antennas or antenna elements for achieving a directed or non-directed antenna characteristic. The antenna subsystem 10 is connected to an RF and/or intermediate frequency (IF) subsystem (RF/IF-SS) 20 which includes an analog receiver chain (Rx-CH) 212 followed by an analog-to-digital (ADC) converter 214 which converts the received signal to the digital domain and outputs a stream of reception data frames to be forwarded to a first DSP (DSP1) 31. The first DSP 31 includes a circular buffer functionality and an Rx baseband subsystem (Rx-BB-SS) 41 which may be implemented as a software running on the first DSP (DSP1) 31. Additionally, the RF/IF subsystem comprises a transmission chain (Tx-CH) 222 which supplies an analog transmission signal received from a digital-to-analog converter (DAC) 224 to the antenna subsystem 10 for wireless transmission. The analog transmission signal is converted by the DAC 224 from a stream of transmission data frames output by a Tx baseband subsystem (Tx-BB-SS) 42 which may be implemented as a software running on a second DSP (DSP2) 32 with a circular buffer functionality. The two DSPs 31, 32 are connected via a memory circuit 33 which may be arranged as a dual port memory or dual gate memory.

It is noted that the two DSPs 31, 32 may be implemented as discrete signal processing circuits or, alternatively, as two threads or software routines, where the first DSP 31 is used for the receiver chain 212 and the second DSP 32 is used for the transmitter chain 222 of the SDR transceiver device. Both DSPs 31, 32 may use hardware-controlled circular buffers for transmitting/receiving data frames of e.g. in-phase (I) and quadrature phase (Q) samples of the transmission/reception signal.

The output from the Tx baseband subsystem 42 on the second DSP 32 may be digital data in a computer file, for example. This data will be modulated by the transmitter chain 222 and sent via a radio channel. This radio channel will introduce interference to the signal in the forms of attenuation, phase delay, and noise. At the receiver side, the signal will be demodulated and reconstructed to produce the original transmitted message or data. The receiver chain 212 recovers a sent message. The receiver chain 212 extracts the carrier, symbol, and frame timing from the signal. It uses this information to extract the message or data from the phase, frequency, and amplitude noise of the channel. The receiver chain may be a direct-down conversion zero IF (ZIF) receiver architecture, where a received signal is mixed with a local oscillator signal which is at the same frequency as the desired signal. Both I and Q components are needed for the local oscillator signal and two mixers at RF are used. The result is that the signal is converted to direct current (DC) frequency level, which simplifies front-end filtering requirements.

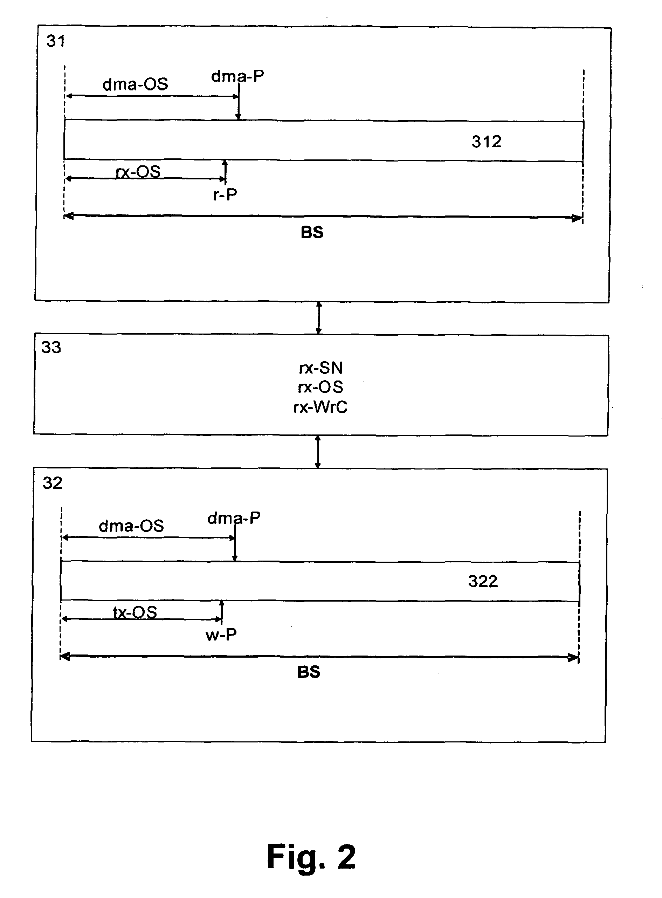

Fig. 2 shows a schematic block diagram of a buffer arrangement according to the first embodiment. IQ samples coming from the ADC 214 or going to the DAC 224 are read/written into circular buffers 312, 322 via direct memory access (DMA), wherein DMA read/write pointers $dma\text{-}P$ are incremented at the frequency of a common sampling clock applied to the DSPs 31,32. Thus, at any instant, the DMA pointers of both circular buffers 312, 322 have the same offset $dma\text{-}OS$. The read pointer $r\text{-}P$ marks the point where the control circuit or control software of the Rx baseband subsystem 41 will read the first IQ sample of a received radio data frame within the circular buffer 312 and has the offset rx-OS. The write pointer w-P marks the point where the control circuit or control software of the Tx baseband subsystem 42 will write the first IQ sample of the next radio data frame to be transmitted and has the offset tx-OS.

The received radio data frame bears a sequence number which is denoted by $rx\text{-}SN$, and the transmitted data frame bears a sequence number which is denoted by $tx\text{-}SN$. Sequence numbers are incremented by "1" with every new radio frame. Furthermore, every time the DMA pointer wraps around the edge of the circular buffer 312, 322, a wrap count is incremented. A parameter $rx\text{-}WrC$ is used to store the value of wrap count at the time the beginning of a radio frame was received at the reception buffer 312, and a parameter $tx\text{-}WrC$ is used to stores the target value for the wrap count at which the next radio frame shall be transmitted and thus written into the transmission buffer 322.

Both circular buffers 312, 322 are of the same size $BS$ which indicates the maximum number of IQ samples which can be stored in the buffers. Both transmitted and received radio frames contain a number $FS$ of IQ samples, which can be calculated as follows:

$$FS = B * BS,$$

where B is an integer.

Now, when a Tx radio data frame with sequence number $tx\text{-}SN$ is to be aligned to an Rx radio data frame with a sequence number $rx\text{-}SN$, this can be calculated as follows:

$$rx\text{-}SN = tx\text{-}SN + N,$$

where N is an integer.

The first IQ sample of the Tx radio data frame can be advanced or delayed relative to the first IQ sample of the Rx radio frame by A samples, where A is a signed integer.

By storing and updating the above parameters $rx\text{-}SN$, $rx\text{-}OS$ and $rx\text{-}WrC$ in the memory circuit 33 so as to be accessible by the second DSP 32 at the transmission buffer 322 of the transmitter side, target values of the parameters $tx\text{-}OS$ and $tx\text{-}WrC$ required for writing transmission data into the transmission buffer 322 can be calculated and used for controlling transmission timing so as to achieve alignment without real-time communication between the two DSPs 31, 32.

The target values can be calculated as follows:

$$txWrC = rxWrC + (txSN + N - rxSN) * B$$

$$txOS = rxOS - A$$

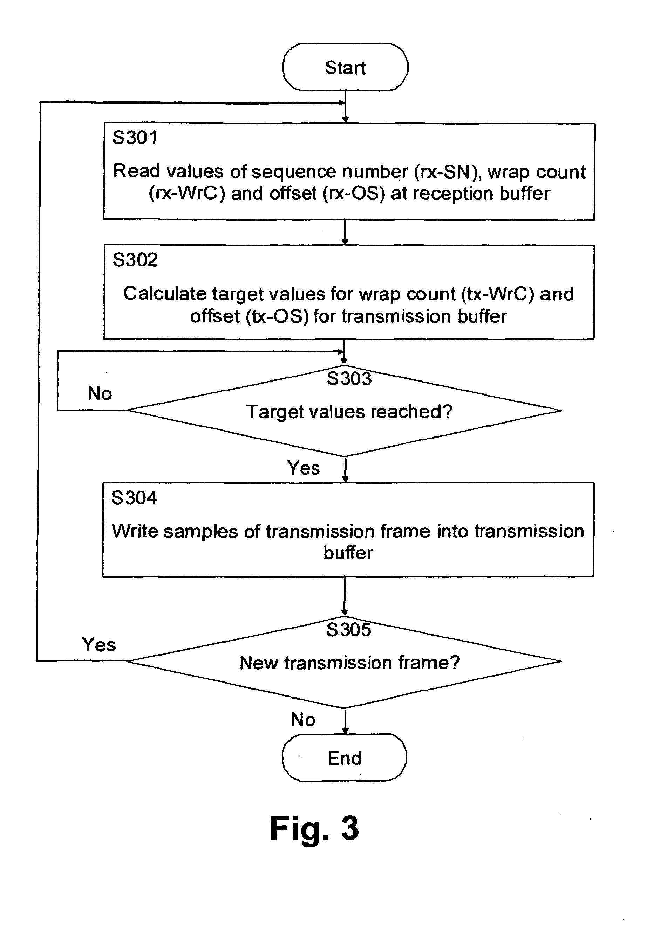

Fig. 3 shows a flow diagram of an alignment procedure according to a second embodiment.

In step S301, stored values of the parameter *rx-SN* for the sequence number, the parameter *rx-WrC* for the wrap count and the parameter *rx-OS* for the read/write offset at the reception buffer 312 are read by the second DSP 32 and used in step S302 to calculate the values for the transmission parameters *tx-OS* for the read/write offset marking the beginning of the next Tx data frame and *tx-WrC* for the wrap count at the transmission buffer 322. Then, in step S303, the second DSP 32 waits for the right moment when the target value are reached to write the IQ samples of the Tx data frame into the circular buffer 322.

Thus, solely an input of the set of values of the parameters *rx- SN, rx- OS* and *rx- Wr*C associated with an Rx data frame received at the first DSP 31 is required at any point in time. These parameters do not have to originate from the latest received radio data frame, so that the system can achieve a reliable frame alignment using an older set of parameters.

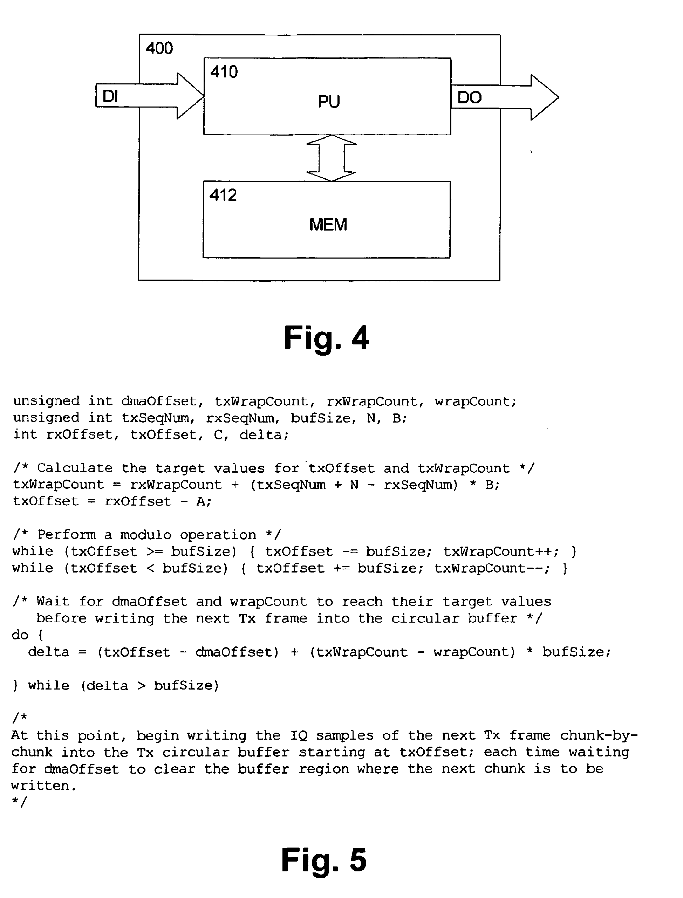

Fig. 4 shows a schematic block diagram of an alternative software-based implementation according to a third embodiment. The required functionalities can be implemented in the second DSP 32 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Fig. 3, which may be implemented as the above mentioned software routines. The processing steps may be performed on the basis of input data DI and may generate output data DO. In case of the second DSP 32, the input data DI may correspond to transmission data forwarded by the Tx baseband subsystem 42, and the output data DO may correspond to the above target values.

Consequently, the functionalities of the above embodiments may be implemented as a computer program product comprising code means for generating each individual step of the frame alignment procedure when run on a computer device or data processor of the respective entity.

Fig. 5 shows an example of a simplified C code for the above procedure of Fig. 3, which might run on the second DSP 32.

In summary, a method and apparatus for aligning data frames in a transceiver device have been described, wherein reception data is buffered in a circular reception buffer and transmission data is buffered in a circular transmission buffer.

Values of a current frame sequence number, a current wrap count and a current read/write offset of the reception buffer are stored and target values for a wrap count and a read/write offset for the transmission buffer are calculated based on the current frame sequence number, the current wrap count and the current read/write offset of the reception buffer. A new data frame is written into the transmission buffer when the target values have been reached at said transmission buffer.

It is apparent that the invention can easily be extended to any transceiver device and system and is not restricted to the SDR technology area. The proposed embodiments can be implemented in connection with any transceiver device at a base station or access device deployed in a cellular or wireless network. The embodiments may thus vary within the scope of the attached claims.

**Claims**

1. A method of aligning data frames in a transceiver device, said method comprising:

   a. buffering reception data in a circular reception buffer (312) and transmission data in a circular transmission buffer (322);
   b. storing values of a current frame sequence number (rx-SN), a current wrap count (rx-WrC) and a current read offset (rx-OS) of said reception buffer (312);
   **characterized in that** the method further comprises:
   c. calculating target values for a wrap count (tx-WrC) and a write offset (tx-OS) for said transmission buffer (322) based on said current frame sequence number (rx-SN), said current wrap count (rx-WrC) and said current read offset (rx-OS) of said reception buffer (312); and
   d. writing a new data frame into said transmission buffer (322) when said target values have been reached at said transmission buffer (322).

**2.** The method according to claim 1, wherein said target value for said wrap count (tx-WrC) of said transmission buffer (322) is calculated by adding a predetermined value to said current wrap count (rx-WrC) of said reception buffer (312).

**3.** The method according to claim 2, wherein said predetermined value is an integer multiple of a difference between a current frame sequence number (tx-SN) of said transmission buffer (322), increased by a first integer value (N), and said current frame sequence number (rx-SN) of said reception buffer (312).

**4.** The method according to any one of the preceding claims, wherein said target value for said write offset (tx-OS) of said transmission buffer (322) is calculated by subtracting or adding a second integer value (A) from/to said current read offset (rx-OS) of said reception buffer (312).

**5.** An apparatus for aligning data frames in a transceiver device, said apparatus comprising:

a. a first circular buffer (312) for temporarily storing reception data of said transceiver apparatus;
b. a second circular buffer (322) for temporarily storing transmission data of said transceiver apparatus;
**characterized in that** the apparatus further comprises:
c. a memory circuit (33) for storing values of a current frame sequence number (rx-SN), a current wrap count (rx-WrC) and a current read offset (rx-OS) of said first circular buffer (312); and
d. a control circuit (32) for calculating target values for a wrap count (tx-WrC) and a write offset (tx-OS) for said second circular buffer (322) based on said current frame sequence number (rx-SN), said current wrap count (rx-WrC) and said current read offset (rx-OS) stored in said memory circuit (33);
e. wherein said control circuit (32) is adapted to write a new data frame into said transmission buffer (322) when said target values have been reached at said transmission buffer (322).

**6.** The apparatus according to claim 5, wherein said control circuit (32) is adapted to calculate said target value for said wrap count (tx-WrC) of said transmission buffer (322) by adding a predetermined value to said current wrap count (rx-WrC) of said reception buffer (312).

**7.** The apparatus according to claim 6, wherein said predetermined value is an integer multiple of a difference between a current frame sequence number (tx-SN) of said transmission buffer (322), increased by a first integer value (N), and said current frame sequence number (rx-SN) of said reception buffer (312).

**8.** The apparatus according to any one of claims 5 to 7, wherein said control circuit (32) is adapted to calculate said target value for said write offset (tx-OS) of said transmission buffer (322) by subtracting or adding a second integer value (A) from/to said current read offset (rx-OS) of said reception buffer (312).

**9.** The apparatus according to any one of claims 5 to 8, wherein said memory circuit is a dual port memory (33) accessible at a first port by said control circuit (32) so as to read said values of said current frame sequence number (rx-SN), said current wrap count (rx-WrC) and said current read offset (rx-OS) from said dual port memory (33), and at a second port by an other control circuit (31) so as to write said values of said current frame sequence number (rx-SN), said current wrap count (rx-WrC) and said current read offset (rx-OS) to said dual port memory (33).

**10.** The apparatus according to claim 9, wherein said control circuit (32) and said other control circuit (31) are digital signal processors.

**11.** A transceiver device comprising an apparatus according to any one of claims 5 to 10.

**12.** A chip device comprising an apparatus according to any one of claims 5 to 10.

**13.** A computer program product comprising code means for producing the steps of method claim 1 when run on a computer device.

**Patentansprüche**

**1.** Verfahren zum Ausrichten von Datenrahmen in einer Sendeempfängervorrichtung, wobei das Verfahren umfasst:

a. Puffern von Empfangsdaten in einem ringförmigen Empfangspuffer (312) und Sendedaten in einem ringförmigen Sendepuffer (322);

b. Speichern von Werten einer aktuellen Rahmensequenznummer (rx-SN), eines aktuellen Umlaufzählstands (rx-WrC) und eines aktuellen Leseversatzes (rx-OS) des Empfangspuffers (312);

**dadurch gekennzeichnet, dass** das Verfahren des Weiteren umfasst:

c. Berechnen von Zielwerten für einen Umlaufzählstand (tx-WrC) und einen Schreibversatz (tx-OS) für den Sendepuffer (322) basierend auf der aktuellen Rahmensequenznummer (rx-SN), dem aktuellen Umlaufzählstand (rx-WrC) und dem aktuellen Leseversatz (rx-OS) des Empfangspuffers (312); und

d. Schreiben eines neuen Datenrahmens in den Sendepuffer (322), wenn die Zielwerte an dem Sendepuffer (322) erreicht worden sind.

2. Verfahren nach Anspruch 1, wobei der Zielwert für den Umlaufzählstand (tx-WrC) des Sendepuffers (322) berechnet wird durch Hinzufügen eines vorbestimmten Werts zu dem aktuellen Umlaufzählstand (rx-WrC) des Empfangspuffers (312).

3. Verfahren nach Anspruch 2, wobei der vorbestimmte Wert ein ganzzahliges Vielfaches einer Differenz zwischen einer aktuellen Rahmensequenznummer (tx-SN) des Sendepuffers (322), die um einen ersten ganzzahligen Wert (N) erhöht wurde, und der aktuellen Rahmensequenznummer (rx-SN) des Empfangspuffers (312).

4. Verfahren nach einem der vorhergehenden Ansprüche, wobei der Zielwert für den Schreibversatz (tx-OS) des Sendepuffers (322) berechnet wird durch Subtrahieren oder Hinzufügen eines zweiten ganzzahligen Werts (A) von/zu dem aktuellen Leseversatz (rx-OS) des Empfangspuffers (312).

5. Vorrichtung zum Ausrichten von Datenrahmen in einer Sendeempfängervorrichtung, wobei die Vorrichtung umfasst:

a. einen ersten ringförmigen Puffer (312) zum vorübergehenden Speichern von Empfangsdaten der Sendeempfängervorrichtung;

b. einen zweiten ringförmigen Puffer (322) zum vorübergehenden Speichern von Sendedaten der Sendeempfängervorrichtung;

**dadurch gekennzeichnet, dass** die Vorrichtung des Weiteren umfasst:

c. einen Speicherschaltkreis (33) zum Speichern von Werten einer aktuellen Rahmensequenznummer (rx-SN), eines aktuellen Umlaufzählstands (rx-WrC) und eines aktuellen Leseversatzes (rx-OS) des ersten ringförmigen Puffers (312); und

d. einen Steuerschaltkreis (32) zum Berechnen von Zielwerten für einen Umlaufzählstand (tx-WrC) und einen Schreibversatz (tx-OS) für den zweiten ringförmigen Puffer (322) basierend auf der aktuellen Rahmensequenznummer (rx-SN) dem aktuellen Umlaufzählstand (rx-WrC) und dem aktuellen Leseversatz (rx-OS), die in dem Speicherschaltkreis (33) gespeichert sind;

e. wobei der Steuerschaltkreis (32) ausgestaltet ist zum Schreiben eines neuen Datenrahmens in den Empfangspuffer (322), wenn die Zielwerte an dem Sendepuffer (322) erreicht worden sind.

6. Vorrichtung nach Anspruch 5, wobei der Steuerschaltkreis (32) ausgestaltet ist zum Berechnen des Zielwerts für den Umlaufzählstand (tx-WrC) des Sendepuffers (322) durch Hinzufügen eines vorbestimmten Werts zu dem aktuellen Umlaufzählstand (rx-WrC) des Empfangspuffers (312).

7. Vorrichtung nach Anspruch 6, wobei der vorbestimmte Wert ein ganzzahliges Vielfaches einer Differenz zwischen einer aktuellen Rahmensequenznummer (tx-SN) des Sendepuffers (322) ist, der um einen ersten ganzzahligen Wert (N) erhöht wurde, und der aktuellen Rahmensequenznummer (rx-SN) des Empfangspuffers (312).

8. Vorrichtung nach einem der Ansprüche 5 bis 7, wobei der Steuerschaltkreis (32) ausgestaltet ist zum Berechnen des Zielwerts für den Schreibversatz (tx-OS) des Sendepuffers (322) durch Subtrahieren oder Hinzufügen eines zweiten ganzzahligen Werts (A) von/zu dem aktuellen Leseversatz (rx-OS) des Empfangspuffers (312).

9. Vorrichtung nach einem der Ansprüche 5 bis 8, wobei der Speicherschaltkreis ein Dual-Port-Speicher (33) ist, auf den an einem ersten Eingang mittels des Steuerschaltkreises (32) zugegriffen werden kann, um die Werte der aktuellen Rahmensequenznummer (rx-SN), des aktuellen Umlaufzählstands (rx-WrC) und des aktuellen Leseversatzes (rx-OS) aus dem Dual-Port-Speicher (33) zu lesen, und an einem zweiten Eingang mittels eines weiteren Steuerschaltkreises (31), um die Werte der aktuellen Rahmensequenznummer (rx-SN), des aktuellen Umlaufzählstands (rx-WrC) und des aktuellen Leseversatzes (rx-OS) in den Dual-Port-Speicher (33) zu schreiben.

**10.** Vorrichtung nach Anspruch 9, wobei der Steuerschaltkreis (32) und der weitere Steuerschaltkreis (31) digitale Signalprozessoren sind.

**11.** Sendeempfängervorrichtung mit einer Vorrichtung nach einem der Ansprüche 5 bis 10.

**12.** Chipvorrichtung mit einer Vorrichtung nach einem der Ansprüche 5 bis 10.

**13.** Computerprogrammprodukt mit Codemitteln zum Erzeugen der Schritte des Verfahrensanspruchs 1 bei dessen Ablauf in einer Computervorrichtung.


**Revendications**

**1.** Procédé d'alignement de trames de données dans un dispositif émetteur récepteur, le procédé comprenant :

a. tamponner des données de réception dans un tampon (312) de réception circulaire et transmettre des données dans un tampon (322) de transmission circulaire ;
b. mémoriser des valeurs d'un nombre (rx-SN), présent de séquences de trame, d'un compte (rx-WrC) présent d'enveloppe et d'un décalage (rx-OS) présent de lecture du tampon (312) de réception ;
**caractérisé en ce que** le procédé comprend en outre :
c. calculer des valeurs cibles pour un compte (tx-WrC) d'enveloppe et pour un décalage (tx-OS) d'écriture pour le tampon (322) de transmission, sur la base du nombre (rx-SN) présent de séquences de trame, du compte (rx-WrC) présent d'enveloppe et du décalage (rx-OS) présent de lecture du tampon (312) de réception ; et
d. écrire une nouvelle trame de données dans le tampon (322) de transmission lorsque ces valeurs cibles ont été atteintes au tampon (322) de transmission.

**2.** Procédé suivant la revendication 1, dans lequel la valeur cible du compte (tx-WrC) d'enveloppe du tampon (322) de transmission est calculée en ajoutant une valeur déterminée à l'avance au compte (rx-WrC) présent d'enveloppe du tampon (312) de réception.

**3.** Procédé suivant la revendication 2, dans lequel la valeur déterminée à l'avance est un multiple en nombre entier d'une différence entre un nombre (tx-SN) présent de séquences de trame du tampon (322) de transmission, augmenté d'une première valeur (N) en nombre entier, et le nombre (rx-SN) présent de séquence de trame du tampon (312) de réception.

**4.** Procédé suivant l'une quelconque des revendications précédentes, dans lequel la valeur cible du décalage (tx-OS) d'écriture du tampon (322) de transmission est calculée en soustrayant ou en ajoutant une deuxième valeur (A) en nombre entier du décalage (rx-OS) présent de lecture du tampon (312) de réception du / au décalage (rx-OS) présent de lecture du tampon (312) de réception.

**5.** Dispositif pour aligner des cadres de données dans un dispositif d'émetteur récepteur, dispositif comprenant :

a. un premier tampon (312) circulaire pour mémoriser temporairement des données de réception du dispositif émetteur récepteur ;
b. un deuxième tampon (322) circulaire pour mémoriser temporairement des données de transmission du dispositif émetteur récepteur ;
**caractérisé en ce que** le dispositif comprend en outre :
c. un circuit (33) de mémoire pour mémoriser des valeurs d'un nombre (rx-SN) présent de séquences de trame, d'un compte (rx-WrC) présent d'enveloppe et d'un décalage (rx-OS) présent de lecture du premier tampon (312) circulaire ; et
d. un circuit (32) de commande pour calculer des valeurs cibles d' un compte (tx-WrC) d'enveloppe et d' un décalage (tx-OS) d'écriture du deuxième tampon (322) circulaire, sur la base du nombre (rx-SN) présent de séquences de trame, du compte (rx-WrC) présent d'enveloppe et du décalage (rx-OS) présent de lecture mémorisés dans le circuit (33) de mémoire ;
e. dans lequel le circuit (32) de commande est conçu pour écrire une nouvelle trame de données dans le tampon (322) de transmission lorsque les valeurs cibles ont été atteintes au tampon (322) de transmission.

**6.** Dispositif suivant la revendication 5, dans lequel le circuit (32) de commande est conçu pour calculer la valeur cible du compte (tx-WrC) d'enveloppe du tampon (322) de transmission en ajoutant une valeur déterminée à l'avance au compte (rx-WrC) présent d'enveloppe du tampon (312) de réception.

7. Dispositif suivant la revendication 6, dans lequel la valeur déterminée à l'avance est un multiple en nombre entier d'une différence entre un nombre (tx-SN) présent de séquence de trames du tampon (322) de transmission, augmenté d'une première valeur (N) en nombre entier, et le nombre (rx-SN) présent de séquence de trames du tampon (312) de réception.

8. Dispositif suivant l'une quelconque des revendications 5 à 7, dans lequel le circuit (32) de commande est conçu pour calculer la valeur cible du décalage (tx-OS) d'écriture du tampon (322) de transmission en soustrayant ou en ajoutant une deuxième valeur (A) en nombre entier du décalage (rx-OS) présent de lecture du tampon (312) de réception du / au décalage (rx-OS) présent de lecture du tampon (312) de réception.

9. Dispositif suivant l'une quelconque des revendications 5 à 8, dans lequel le circuit de mémoire est une mémoire (33) à accès dual accessible à un premier accès par le circuit (32) de commande, de manière à lire les valeurs du nombre (rx-SN) présent de séquence de trames, du compte (rx-WrC) présent d'enveloppe et du décalage (rx-OS) présent de lecture dans la mémoire (33) à accès dual et à un deuxième accès par un autre circuit (31) de commande, de manière à écrire ces valeurs du nombre (rx-SN) présent de séquence de trames, du compte (rx-WrC) présent d'enveloppe et du décalage (rx-OS) présent de lecture dans la mémoire (33) à accès dual.

10. Dispositif suivant la revendication 9, dans lequel le circuit (32) de commande et l'autre circuit (31) de commande sont des processeurs de signaux numériques.

11. Dispositif émetteur récepteur comprenant un dispositif suivant l'une quelconque des revendications 5 à 10.

12. Dispositif à puce comprenant un dispositif suivant l'une quelconque des revendications 5 à 10.

13. Produit de programme d'ordinateur comprenant des moyens de code pour produire les stades du procédé de la revendication 1 lorsqu'il passe sur un dispositif d'ordinateur.

# Fig. 1

**Fig. 2**

**Fig. 3**

**Fig. 4**

```
unsigned int dmaOffset, txWrapCount, rxWrapCount, wrapCount;
unsigned int txSeqNum, rxSeqNum, bufSize, N, B;
int rxOffset, txOffset, C, delta;

/* Calculate the target values for txOffset and txWrapCount */
txWrapCount = rxWrapCount + (txSeqNum + N - rxSeqNum) * B;
txOffset = rxOffset - A;

/* Perform a modulo operation */
while (txOffset >= bufSize) { txOffset -= bufSize; txWrapCount++; }
while (txOffset < bufSize) { txOffset += bufSize; txWrapCount--; }

/* Wait for dmaOffset and wrapCount to reach their target values
   before writing the next Tx frame into the circular buffer */
do {
   delta = (txOffset - dmaOffset) + (txWrapCount - wrapCount) * bufSize;

} while (delta > bufSize)

/*
At this point, begin writing the IQ samples of the next Tx frame chunk-by-
chunk into the Tx circular buffer starting at txOffset; each time waiting
for dmaOffset to clear the buffer region where the next chunk is to be
written.
*/
```

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050141418 A1
- EP 2045973 A1
- JP 2001094613 A